(19) **Europäisches Patentamt**
**European Patent Office**
**Office européen des brevets**

(11) **EP 4 357 031 B1**

(12) **EUROPEAN PATENT SPECIFICATION**

(45) Date of publication and mention
of the grant of the patent:
**31.12.2025 Bulletin 2026/01**

(21) Application number: **22897409.3**

(22) Date of filing: **10.10.2022**

(51) International Patent Classification (IPC):
**B05D 3/02** (2006.01)       **B05D 3/04** (2006.01)
**B05D 3/06** (2006.01)       **H01M 4/04** (2006.01)

(52) Cooperative Patent Classification (CPC):
**H01M 4/04; F26B 3/283; F26B 3/30; F26B 13/007;
F26B 13/104; F26B 13/108; F26B 21/10;
F26B 21/12;** B05D 3/0263; B05D 3/0272;
B05D 2252/02; Y02E 60/10

(86) International application number:
**PCT/CN2022/124340**

(87) International publication number:
**WO 2023/093324 (01.06.2023 Gazette 2023/22)**

(54) **OVEN AND BATTERY ASSEMBLY LINE PRODUCTION EQUIPMENT**

OFEN UND PRODUKTIONSAUSRÜSTUNG FÜR BATTERIEMONTAGESTRASSE

FOUR ET ÉQUIPEMENT DE PRODUCTION DE LIGNE D'ASSEMBLAGE DE BATTERIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.11.2021 CN 202122902395 U**

(43) Date of publication of application:
**24.04.2024 Bulletin 2024/17**

(73) Proprietor: **Contemporary Amperex Technology
(Hong Kong) Limited
Central, Central And Western District (HK)**

(72) Inventors:
- **LUO, Fang**
  **Ningde, Fujian 352100 (CN)**
- **CHE, Huan**
  **Ningde, Fujian 352100 (CN)**
- **NIE, Tao**
  **Ningde, Fujian 352100 (CN)**
- **CHEN, Wei**
  **Ningde, Fujian 352100 (CN)**
- **LI, Shisong**
  **Ningde, Fujian 352100 (CN)**

(74) Representative: **Gong, Jinping
CocreateIP
Neumarkter Straße 21
81673 München (DE)**

(56) References cited:
WO-A1-2014/103786        CN-A- 104 067 080
CN-U- 208 390 371        CN-U- 209 639 443
CN-U- 216 459 890        JP-A- 2004 071 472
JP-A- H 058 372          JP-A- H08 111 222
JP-B1- 5 259 875         JP-B2- 4 571 841
US-A1- 2010 269 366

**EP 4 357 031 B1**

## Description

## FIELD

The present disclosure relates to the field of battery production device technologies, and more particularly, to an oven and a battery assembly line production device.

## BACKGROUND

In that relate art, when an electrode plate is dried at a high speed by using an oven, if only using a hot air drying, a slow heating is needed to prevent a surface of the electrode plate from cracking, which cannot satisfy a high-speed drying demand. If an infrared drying is added on the basis of the hot air drying, a drying efficiency of the electrode plate can be improved, but adhesives on the electrode plate are easy to float, resulting in a reduced performance of the electrode plate and potential safety risks.
US 2010/269366 describes a drying device including a travelling unit and a drying unit to dry a thin film sheet applicable to a lithium secondary battery.
JP 2004 071472 illustrates a drying device of coating sheet, and drying method of coating sheet.
JP HO5 8372 describes a drying apparatus for drying a web traveling in a printing machine and a coater, or the like.

## SUMMARY

In view of the above problems, embodiments of the present disclosure provide an oven and a battery assembly line production device to avoid a surface cracking of an electrode plate and a floating of adhesives on the electrode plate, improving a performance of the electrode plate and reducing safety risks.

According to an embodiment of the present disclosure, the embodiments of the present disclosure provide the oven for drying an electrode plate. The oven includes a first oven unit, a second oven unit, a third oven unit, and a fourth oven unit that are sequentially connected in series in a conveying direction of the electrode plate. Each of oven units is internally provided with at least one oven body arranged in series in the conveying direction. Each of the at least one oven body has a drying channel that extends in the conveying direction. Each of the oven units further includes two opposite air nozzle groups that are located in the drying channel and respectively disposed at a first side and a second side of the drying channel in the conveying direction. Each of the air nozzle groups includes a plurality of air nozzles arranged at intervals in the conveying direction. Each of the first oven unit and the third oven unit further includes an infrared heater group located in a corresponding drying channel. The infrared heater group is disposed on at least one of the first side and the second side of the drying channel. Each infrared heater group includes a plurality of infrared heaters arranged at intervals in the conveying direction. The plurality of infrared heaters in each infrared heater group and the plurality of air nozzles located at one side of the drying channel are alternatively arranged in the conveying direction.

In technical solutions of the embodiments of the present disclosure, the oven at least includes the first oven unit, the second oven unit, he third oven unit, and the fourth oven unit that are sequentially connected in series in the conveying direction of the electrode plate. The oven is divided into the first oven unit, the second oven unit, the third oven unit, and the fourth oven unit based on drying physical characteristics of the electrode plate. The first oven unit and the third oven unit are internally provided with the air nozzles and the infrared heaters for drying the electrode plate by hot air and infrared rays. The second oven unit and the fourth oven unit are internally provided with the air nozzles for drying the electrode plate by hot air. In this way, a preheating and heating of the electrode plate can be realized in the first oven unit, and a constant-speed drying of the electrode plate can be realized in the second oven unit. A reduced-speed drying of the electrode plate can be realized in the third oven unit and fourth oven unit, which can reduce a floating amount of adhesives and a residual amount of plasticizer in the electrode plate. Therefore, a quality of the electrode plate can be guaranteed while increasing a drying speed, which reduces the safety risks.

In one embodiment, in the first oven unit and the third oven unit, a spacing between two adjacent air nozzles located at one side of the drying channel is smaller than or equal to about 80 mm. A spacing between two adjacent infrared heaters located at one side of the drying channel is smaller than or equal to about 80 mm. In this way, not only can a drying rate be improved, but also an edge of the electrode plate can be prevented from being curled and cracked due to an excessive drying.

In one embodiment, in the first oven unit and the third oven unit, a plane at which the electrode plate is located is defined as a first reference plane. A distance between the air nozzle and the first reference surface in the first direction ranges from about 4 mm to about 200 mm, and a distance between the infrared heater and the first reference surface in the first direction ranges from about 20 mm to about 200 mm. The first direction is perpendicular to the conveying direction. In this way, by arranging the air nozzles and the infrared heaters with a certain distance from the first reference plane, the electrode plate is prevented from drying too fast due to excessive heat under the condition that a required drying rate is satisfied.

In one embodiment, the infrared heater has a radiation width $d2$ relative to the electrode plate in a width direction of the electrode plate, the air nozzle has a blowing coverage width $d3$ relative to the electrode plate in the width direction of the electrode plate, and both the radiation width $d2$ and the blowing coverage width $d3$ are greater than a width d1 of the electrode plate. The width direction of the electrode plate is perpendicular to the conveying direction of the electrode plate. Therefore, a surface of the electrode plate can be uniformly covered by emitted heat, and uniformity of drying the surface of the electrode plate can be improved.

In one embodiment, the width d1 of the electrode plate, a heating length d2 of the infrared heater in the width direction of the electrode plate, and an air outlet length d3 of the air nozzle in the width direction of the electrode plate satisfy a first predetermined condition. The first predetermined condition includes: a difference between d2 and d1 ranging from about 100 mm to about 600 mm; and a difference between d3 and d1 ranging from about 100 mm to about 600 mm. In this way, the surface of the electrode plate can be guaranteed to be covered by the emitted heat, while preventing the electrode plate from drying too fast due to the excessive heat.

In one embodiment, in the first oven unit and the third oven unit, the air nozzles in each of the two air nozzle groups include air outlet nozzles and air return nozzles that are alternatively arranged in the conveying direction of the electrode plate. Each of the plurality of infrared heaters is disposed between the air outlet nozzle and the air return nozzle. In this way, drying of each stage on the electrode plate can be uniformly controlled.

In one embodiment, in the first oven unit and the third oven unit, the air nozzles in each of the two air nozzle groups include air outlet nozzles, and the air outlet nozzles and the infrared heaters are alternatively arranged in the conveying direction. An air return opening is disposed between the infrared heater and the air outlet nozzle. In this way, by arranging the air return opening and avoiding a recovery of waste heat, a situation in which a high temperature in each oven unit occurs due to a temperature runaway in each oven unit can be prevented.

In one embodiment, in the second oven unit and the fourth oven unit, the air nozzle group located above a plane at which the electrode plate is located has an air outlet area greater than an air outlet area of the air nozzle group located below the plane at which the electrode plate is located. In this way, since the air nozzle group located above the plane at which the electrode plate is located has the air outlet area greater than the air outlet area of the air nozzle group located below the plane at which the electrode plate is located, an air outlet speed can be lowered to avoid an instantaneous drying rate being too fast. At the same time, without affecting the drying efficiency of the electrode plate, a speed of migration of the adhesives from a lower layer of the electrode plate to an upper layer can be slowed down, thereby reducing the floating amount of the adhesives.

In one embodiment, in the second oven unit and the fourth oven unit, a spacing between adjacent air nozzles in the air nozzle group located above a plane at which the electrode plate is located is equal to or smaller than about 40 mm. A spacing between adjacent air nozzles in the air nozzle group located above a plane at which the electrode plate is located is equal to or smaller than about 80 mm. In this way, by setting a predetermined spacing, the air outlet area and heat distribution can be adjusted to avoid a drying rate of the electrode plate being too fast.

In one embodiment, in the second oven unit and the fourth oven unit, the air nozzles in the air nozzle group located above a plane at which the electrode plate is located include at least two air outlet slits. In this way, a lower air speed can be achieved through the air outlet slits, slowing down the floating of the adhesives in the electrode plate.

In one embodiment, a spacing between adjacent air outlet slits ranges from about 1 mm to about 8 mm. In this way, the air speed can be further reduced, slowing down the floating of the adhesives in the electrode plate.

In one embodiment, in the second oven unit and the fourth oven unit, the air nozzles in the air nozzle group located above a plane at which the electrode plate is located are provided with a plurality of air outlet openings. In this way, the air outlet opening can be used to reduce the air outlet speed and slow down the floating of the adhesives in the electrode plate.

In one embodiment, the air nozzle has an open porosity ranging from about 10% to about 40%. In this way, the air speed can be further reduced, slowing down the floating of the adhesives in the electrode plate.

In one embodiment, in the second oven unit and the fourth oven unit, a plane at which the electrode plate is located is defined as a second reference plane. A distance between the air nozzle and the second reference plane in the first direction ranges from about 4 mm to about 200 mm. The first direction is perpendicular to the conveying direction. In this way, by arranging the air nozzles at a certain distance from the second reference plane, a more uniform drying process is realized while maintaining the drying speed.

In one embodiment, a total air volume P in the oven, a number n of the oven body, and an average air volume A in each oven body satisfy following relationship: $A=P/(n-1)$. An air volume A1 of the oven body in the first oven unit, an air volume A2 of the oven body in the second oven unit, an air volume A3 of the oven body in the third oven unit, and an air volume A4 of the oven body in the fourth oven unit satisfy a second predetermined condition. The second predetermined condition includes: $A1=(0.8\sim1.5)*A$; $A2=(0.5\sim1.0)*A$; $A3=(0.8\sim1.5)*A$; and $A4=(0.8\sim1.5)*A$. In this way, a temperature of the oven can be easily adjusted within a range from a room temperature to 180°C, and a quality of the oven can be guaranteed while increasing the drying speed.

According to another embodiment of the present disclosure, the embodiments of the present disclosure provide a battery assembly line production device including the above-described oven. In this way, by using the oven to dry the electrode plate, an electrode plate with better performance can be obtained, which in turn facilitates a manufacture of batteries with superior safety performance.

According to structural characteristics and the drying characteristics of the electrode plate, the embodiments of the present disclosure divides the oven into the first oven unit, the second oven unit, the third oven unit, and the fourth oven unit. The air nozzles and the infrared heaters are disposed in the first oven unit and the third oven unit, enabling that a drying capacity of the first oven unit and the third oven unit can be improved. The air nozzles are disposed in the second oven unit and the fourth oven unit, which enables that a cracking of the electrode plate due to over-high temperature is avoided. On a premise that a total length of the oven cannot be greatly increased, a proportion of the first oven unit and the third oven unit is shortened, and a proportion of the second oven unit is prolonged, which enables that the product quality can be guaranteed while increasing the drying speed.

The above description is merely an overview of the technical solutions of the present disclosure. To facilitate a clear understanding of technical approaches of the present disclosure, the technical solutions can be performed in accordance with the contents of the specification. Meanwhile, to clarify and explain the above and other objects, features, and advantages of the present disclosure, specific implementations of the present disclosure will be described below.

## BRIEF DESCRIPTION OF THE DRAWINGS

Various other advantages and benefits will become apparent to those skilled in the art after reading the detailed description of embodiments given below. The accompanying drawings are used for a purpose of illustrating the embodiments only, rather than limiting the present disclosure. Moreover, throughout the accompanying drawings, same elements are denoted by same reference numerals. In the accompanying drawings:

FIG. 1 is a schematic diagram of a structure of an oven in an embodiment of the present disclosure.
FIG. 2 is a schematic diagram of a structure of an electrode plate in an embodiment of the present disclosure.

Reference numerals in the detailed description are as follows:

first oven unit 10; second oven unit 20; third oven unit 30; fourth oven unit 40;
oven body 100; drying channel 110;
air nozzle 200;
infrared heater 300;
electrode plate P;
conveying direction x; first direction z; width direction y;
first reference plane s1; second reference plane s2;

first stage L1; second stage L2; third stage L3; fourth stage L4;
first spacing a1; second spacing a2; first distance a3; second distance a4; third spacing a5; fourth spacing a6; third distance a7;
first contour line O1; second contour line O2.

## DETAILED DESCRIPTION OF THE EMBODIMENTS

To make the above-mentioned objects, features, and advantages of the present disclosure more obvious and comprehensive, a detailed description of specific embodiments of the present disclosure will be given below in conjunction with the accompanying drawings. In the following description, many specific details are provided to facilitate full understanding of the present disclosure. However, the present disclosure can be implemented in many other ways than those described herein, and similar improvements can be made by those skilled in the art without contradicting the intent of the present disclosure. Therefore, the present disclosure is not limited by specific embodiments disclosed below.

In the description of the present disclosure, it should be understood that the orientation or the position indicated by terms such as "over", "below", "bottom", "inner", "outer" refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, terms "first" and "second" are only used for descriptive purposes, and cannot be understood as indicating or implying relative importance or implicitly indicating the number of the indicated technical features. Therefore, the features associated with "first" and "second" may explicitly or implicitly include at least one of the features. In the description of the present disclosure, "plurality" means at least two, unless otherwise exemplarily defined.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

It should be noted that when an element is said to be "fixed to" or "disposed at" another element, it may be directly on the other element or there may be a centered element. When an element is said to be "attached" to another element, it may be directly attached to the other element or there may be both centered elements. As used herein, the terms "vertical", "horizontal", "top", "bottom", "left", "right", and similar expressions are used herein for illustrative purposes only and are not intended to be the only means of implementation.

In the present disclosure, a battery cell may include a lithium ion secondary battery, a lithium ion primary battery, a lithium sulfur battery, a sodium lithium ion battery, a sodium ion battery or a magnesium ion battery, etc., which is not limited in the embodiments of the present disclosure. The battery cell may be cylindrical, flat, cuboid or other shapes, which is not limited in the embodiments of the present disclosure. The battery cell is generally divided into three types based on a packaging method: cylindrical battery cell, prismatic battery cell, and soft-pack battery cell, which is not limited in the embodiments of the present disclosure.

The battery referred to in the embodiments of the present disclosure refers to a single physical module including one or more battery cells to provide higher voltage and capacity. For example, the battery mentioned in the present disclosure may include a battery module or a battery pack, etc. The battery generally included a case for enclosing one or more battery cells. The case can prevent liquid or other foreign matter from affecting the charging or discharging of the battery cell.

The battery cell includes an electrode assembly and an electrolyte, and the electrode assembly consists of a positive electrode plate, a negative electrode plate, and a separator. The battery cell mainly relies on metal ions moving between the positive electrode plate and the negative electrode plate to operate. The positive electrode plate includes a positive electrode current collector and a positive electrode active material layer. The positive electrode active material layer is coated on a surface of the positive electrode current collector. The positive electrode current collector on which the positive electrode active material layer is not coated protrudes from the positive electrode current collector on which the positive electrode active material layer is coated, and the positive electrode current collector on which the positive electrode active material layer is not coated serves as a positive electrode tab. Taking a lithium ion battery as an example, the positive electrode current collector may be made of aluminum, and the positive electrode active material may be lithium cobalt, lithium iron phosphate, ternary lithium, lithium permanganate, or the like. The negative electrode plate includes a negative electrode current collector and a negative electrode active material layer. The negative electrode active material layer is coated on a surface of the negative electrode current collector. The negative electrode current collector not coated with the negative electrode active material layer protrudes from the negative electrode current collector coated with the negative electrode active material layer, and the negative electrode current collector not coated with the negative electrode active material layer serves as a negative electrode tab. The negative electrode current collector may be made of copper, and the negative electrode active material may be carbon, silicon, or the like. To ensure that a large current does not fuse, a plurality of positive electrode tabs is stacked together, and a plurality of negative electrode tabs is stacked together. The separator may be PP (polypropylene), PE (polyethylene) or ceramic coated with PVDF (polyvinylidene fluoride).

With the development of coating technology, the coating technology has been widely used in various technical fields, especially in battery production, which requires coating for battery electrode plate. The oven is a major component in the coating of battery electrode plate or in the coating and printing of various films.

However, an inventor of the present disclosure noticed that when drying the electrode plate at high speed by the oven, if only a hot air drying is used, a slow heating is required to prevent cracking on the surface of the electrode plate, which cannot meet needs of high-speed drying. To improve a drying efficiency of the electrode plate, an infrared drying can be added on the basis of the hot air drying. But in an actual application process, when an infrared lamp opening is full, a lamp temperature can reach more than 750°C. Only an emitter cooler is used to cool the lamp, the cooling is slow, and the electrode plate is easy to change color and break in the cooling process. At the same time, the adhesives on the electrode plate is easy to float, which causes a performance of the electrode plate to decrease and has potential safety risks.

Based on above considerations, to avoid problems of the cracking on the surface of the electrode plate and the floating of the adhesives on the electrode plate, improve the performance of the electrode plate and reduce safety risks, the inventor of the present disclosure has designed the oven for drying the electrode plate through in-depth research.

The oven disclosed in the embodiments of the present disclosure may, but is not limited to, be used for drying the electrode plate, and may also be used with the oven disclosed herein to form a production device (such as a coating machine) in the battery assembly line. In this way, a better performance of the electrode plate can be obtained, which facilitates manufacturing a battery with more superior safety performance.

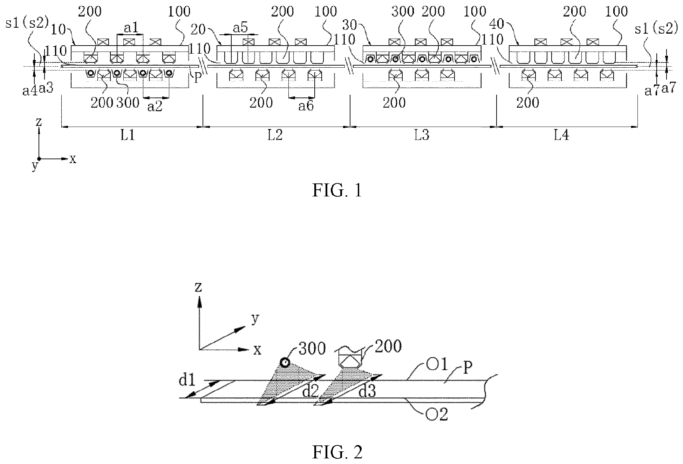

According to some embodiments of the present disclosure, reference is made to FIG. 1, which shows a schematic diagram of a structure of an oven in an embodiment of the present disclosure. For ease of illustration, only portions relevant to the embodiments of the present disclosure are shown.

For ease of understanding, as shown in FIG. 1, an upper portion of the drawing is defined as an upper portion, and a lower portion of the drawing is defined as a lower portion. A left portion of the drawing is defined as a left portion, and a right portion of the drawing is defined as a right portion. An outward portion of the drawing is defined as a front portion, and an inward portion of the drawing is defined as a back portion. Subsequent drawings follow the definitions in FIG. 1. The above definitions are for illustrative purposes only and are not to be construed as limiting the present disclosure.

The embodiments of the present disclosure provide an oven for drying an electrode plate P. The oven includes a first oven unit 10, a second oven unit 20, a third oven unit 30, and a fourth oven unit 40 that are sequentially connected in series in a conveying direction x (such as a left-to-right direction as illustrated in FIG. 1) of the electrode plate P. Each of oven units is internally provided with at least one oven body 100 arranged in series in the conveying direction x (as illustrated in FIG. 1 where an oven body 100 is provided in the first oven unit 10, the second oven unit 20, the third oven unit 30, and the fourth oven unit 40). Each of the at least one oven body 100 has a drying channel 110 that extends in the conveying direction x. Each of the oven units further includes two opposite air nozzle groups that are located in the drying channel 110 and respectively disposed at a first side and a second side of the drying channel 110 (as illustrated in FIG. 1 in a case of an upper side and a lower side of the drying channel 110) in the conveying direction x. Each of the two air nozzle groups includes a plurality of air nozzles 200 arranged at intervals in the conveying direction x. Each of the first oven unit 10 and the third oven unit 30 further includes an infrared heater group located in a corresponding drying channel 110. The infrared heater group is disposed on at least one of the first side and the second side of the drying channel 110. Each infrared heater group includes a plurality of infrared heaters 300 arranged at intervals in the conveying direction x. The plurality of infrared heaters 300 in each infrared heater group and the plurality of air nozzles 200 located at one side of the drying channel 110 are alternatively arranged in the conveying direction x. That is, the infrared heater group may be disposed at the first side of the drying channel 110 (such as the upper side of the drying channel 110 illustrated in FIG. 1), disposed at the second side of the drying channel 110 (such as the lower side of the drying channel 110 illustrated in FIG. 1), or disposed at both the first side and the second side of the drying channel 110 (such as the upper side and the lower side of the drying channel 110 illustrated in FIG. 1). By way of example, as illustrated in FIG. 1, the infrared heater group within the first oven unit 10 is disposed at the lower side of the drying channel 110, and the infrared heater group within the third oven unit 30 is disposed at the upper side of the oven. A design can be made based on usage requirements, and the embodiments of the present disclosure are not exemplarily limited.

Therefore, the oven is divided into the first oven unit 10, the second oven unit 20, the third oven unit 30, and the fourth oven unit 40 based on the physical characteristics of drying of the electrode plate P, i.e., a whole drying process is divided into a first stage L1, a second stage L2, a third stage L3, and a fourth stage L4. It can be understood that the drying process of the electrode plate P located in the first oven unit 10 is in the first stage L1, and the drying process of the electrode plate P located in the second oven unit 20 is in the second stage L2. The drying process of the electrode plate P located in the third oven unit 30 is in the third stage L3, and the drying process of the electrode plate P located in the fourth oven unit 40 is in the fourth stage L4. The first oven unit 10 and the third oven unit 30 are provided with the air nozzles 200 and the infrared heaters 300 for drying the electrode plate P by hot air and infrared rays. The second oven unit 20 and the fourth oven unit 40 are provided with the air nozzles 200 for drying the electrode plate P by hot air. The first stage L1 is a preheating stage, in which the infrared heater 300 can increase a drying rate and the surface of the electrode plate P is in a wet film state. The adhesive distribution in the electrode plate P is relatively uniform at this stage. The second stage L2 is a constant-speed drying stage, in which the surface of the electrode plate P is in a mixed state of dry film and wet film. Moisture loss is relatively large in this stage. Since a particle size of the adhesive is smaller than that of graphite, if moisture evaporates too fast, the adhesive will also migrate upward rapidly, so only the air nozzle 200 is provided in the second oven unit 20. The third stage L3 is a first speed-reduction drying stage, in which the moisture of the electrode plate P is basically volatilized and the surface of the electrode plate P is basically in a dry state. The infrared rays have penetrability, which can vibrate molecules in the plasticizer in the electrode plate P, thereby increasing a volatility of the plasticizer and preventing volatile plasticizer from remaining in the electrode plate P to affect the electrical performance of the battery. The fourth stage L4 is a second speed-reduction drying stage, and the electrode plate P is in the drying stage. Only the air nozzle 200 is provided to avoid cracking due to excessive temperature when the electrode plate P is out of the oven. In this way, the preheating and temperature raising of the electrode plate P can be realized in the first oven unit 10 The constant-speed drying of the electrode plate P can be realized in the second oven unit 20. The reduced-speed drying of the electrode plate P can be realized in the third oven unit 30 and the fourth oven unit 40. The floating amount of the adhesives and the residual amount of the plasticizer in the electrode plate P can be reduced, and the quality of the electrode plate P can be ensured while increasing the drying speed, which reduces the safety risks.

It should be noted that "the plurality of infrared heaters 300 in each infrared heater group and the plurality of air nozzles 200 located at one side of the drying channel 110 are alternatively arranged in the conveying direction x" includes a case where the infrared heater 300, the air nozzle 200, the infrared heater 300, the air nozzle 200 ,... are alternately arranged in this order.

In some embodiments, referring to FIG. 1, in the first oven unit 10 and the third oven unit 30, a spacing between two adjacent air nozzles 200 located at one side of the drying channel 110 is a first spacing a1. A spacing between two adjacent infrared heaters 300 located at one side of the drying channel 110 is a second spacing a2. Both the first spacing a1 and the second spacing a2 are smaller than or equal to about 80 mm. In this way, not only can the drying rate be improved, but also an edge of the electrode plate P can be prevented from being curled and cracked due to excessive drying.

In some embodiments, referring to FIG. 1, in the first oven unit 10 and the third oven unit 30, a plane at which the electrode plate P is located is defined as a first reference plane s1. A distance between the air nozzle 200 and the first reference surface s1 in the first direction z is a first distance a3, and a distance between the infrared heater 300 and the first reference surface s1 in the first direction z is a second distance a4. The first distance a3 ranges from about 4 mm to about 200 mm, and the second distance a4 ranges from about 20 mm to about 200 mm. The first direction z is perpendicular to the conveying direction x, i.e. the vertical direction illustrated in FIG. 1. In this way, by arranging the air nozzles 200 and the infrared heaters 300 with a certain distance from the first reference plane s1, the electrode plate P is prevented from drying too fast due to excessive heat under the condition that a required drying rate is satisfied.

FIG. 2 is a schematic diagram of a structure of an electrode plate P according to an embodiment of the present disclosure. For ease of illustration, only portions relevant to embodiments of the present disclosure are shown.

In some embodiments, referring to FIG. 2 in conjunction with FIG. 1, the infrared heater 300 has a radiation width d2 relative to the electrode plate P (i.e., a front-rear direction illustrated in FIG. 2) in a width direction y of the electrode plate P, the air nozzle 200 has a blowing coverage width d3 relative to the electrode plate P in the width direction y of the electrode plate P, both the radiation width d2 and the blowing coverage width d3 are greater than a width d1 of the electrode plate P. The width direction y of the electrode plate P is perpendicular to the conveying direction x of the electrode plate P. Therefore, a surface of the electrode plate P can be uniformly covered by emitted heat, and uniformity of drying the surface of the electrode plate P can be improved. In particular to some embodiment, the width d1 of the electrode plate P, a radiation width d2 of the infrared heater 300 in the width direction y of the electrode plate P, and a blowing coverage width d3 of the air nozzle 200 in the width direction y of the electrode plate P satisfy a first predetermined condition. The first predetermined condition includes: a difference between d2 and d1 ranging from about 100 mm to about 600 mm; and a difference between d3 and d1 ranging from about 100 mm to about 600 mm. In this way, the surface of the electrode plate can be guaranteed to be covered by the emitted heat, while preventing the electrode plate from drying too fast due to the excessive heat.

It should be noted that the "radiation width" refers to that the infrared rays emitted by the infrared heater 300 can reach the electrode plate P in the width direction y and cover a corresponding width direction portion on the electrode plate P. That is to say, an orthographic projection of the infrared rays emitted by the infrared heater 300 on a plane where the electrode plate P is located can cover the corresponding width direction portion on the electrode plate P. The "blowing coverage width" means that air blown from the air nozzle 200 can reach the electrode plate P in the width direction y and cover a corresponding width direction portion on the electrode plate P. That is to say, an orthographic projection of the air blown from the air nozzle 200 on a plane where the electrode plate P is located can cover the corresponding width direction portion on the electrode plate P. It can be understood that the electrode plate P has a first contour line O1 and a second contour line O2 in the width direction y, and a portion of the electrode plate P located between the first contour line O1 and the second contour line O2 can be covered by infrared rays emitted from the infrared heater 300 and air blown from the nozzle 200.

Further research by the inventor of the present disclosure shows, in the related art, that heated air enters the oven through an air duct, and then is distributed to each air outlet nozzle for air outlet. After passing through the electrode plate P, the air is recovered through a return air nozzle. Recovered air is partially discharged out of the oven. The recovered air partially enters a heat exchanger, and enters the oven again after being heated by the heat exchanger. An air return opening of the oven is disposed at a top of the oven, and each oven body 100 is usually provided with an air return opening. Because it is easy to generate a temperature runaway in the oven, the temperature in the oven can only be adjusted in a range from 90°C to 180°C. To achieve a good drying process of the electrode plate P in each stage, the temperature in the oven is usually adjustable in a range from room temperature to 180°C, achieving a constant-speed drying in a drying process of the second stage L2 and a reduced-speed drying in a drying process of the fourth stage L4.

Therefore, please continue to refer to FIG. 1. In one embodiment, in the first oven unit 10 and the third oven unit 30, the air nozzles 200 in each of the two air nozzle groups include air outlet nozzles and air return nozzles that are alternatively arranged in the conveying direction x. Each of the plurality of infrared heaters 300 is disposed between the air outlet nozzle and the air return nozzle. In this way, drying of each stage on the electrode plate can be uniformly controlled. In some other embodiments, in the first oven unit 10 and the third oven unit 30, the air nozzles 200 in each of the two air nozzle groups include air outlet nozzles that are alternatively arranged with the infrared heaters 300 in the conveying direction x. An air return opening is disposed between the infrared heater 300 and the air outlet nozzle. In this way, by arranging the air return opening and avoiding a recovery of waste heat, a situation in which a high temperature in each oven unit occurs due to a temperature runaway in each oven unit can be prevented. Of course, in other embodiments, in the first oven unit 10 and the third oven unit 30, each of the air nozzles 200 may integrate functions of air outlet and air return. In this way, an adjustable temperature range in the oven can be widened, and the adhesive floating amount of the electrode plate P can be reduced by adjusting the temperature in the oven.

In some embodiment, please continue to refer to FIG. 1. In the second oven unit 20 and the fourth oven unit 40, the air nozzle group located above a plane at which the electrode plate P is located has an air outlet area greater than an air outlet area of the air nozzle group located below the plane at which the electrode plate P is located. In this way, since the air nozzle group located above the plane at which the electrode plate P is located has the air outlet area greater than the air outlet area of the air nozzle group located below the plane at which the electrode plate P is located, an air outlet speed can be lowered to avoid an instantaneous drying rate being too fast. At the same time, without affecting the drying efficiency of the electrode plate, a speed of migration of the adhesives from a lower layer of the electrode plate to an upper layer can be slowed down, thereby reducing the floating amount of the adhesives.

It should be noted that a number of air nozzles in the air nozzle group located above the plane where the electrode plate P is located may be greater than, less than or equal to a number of air nozzles in the air nozzle group located below the plane where the electrode plate P is located. For example, if the air outlet area of each of the air nozzles 200 in the air nozzle group located above the plane where the electrode plate P is located is greater than the air outlet area of each of the air nozzles 200 in the air nozzle group located below the plane where the electrode plate P is located, the number of air nozzles in the air nozzle group located above the plane where the electrode plate P is located may be at least greater than or equal to the number of air nozzles 200 in the air nozzle group located below the plane where the electrode plate P is located. The number of air nozzles 200 in each air nozzle group is related to a corresponding air outlet area. As long as the air outlet area of the air nozzle group located above the plane where the electrode plate P is located is greater than the air outlet area of the air nozzle group located below the plane where the electrode plate P is located, which is not exemplarily limited in the embodiment of the present disclosure.

In some embodiments, please continue to refer to FIG. 1. In the second oven unit 20 and the fourth oven unit 40, a spacing between adjacent air nozzles 200 in the air nozzle group located above a plane at which the electrode plate P is located is a third spacing a5. A spacing between adjacent air nozzles 200 in the air nozzle group located above a plane at which the electrode plate P is located is a fourth spacing a6. The third spacing a5 is smaller than or equal to about 40 mm, and the fourth spacing a6 is smaller than or equal to about 80 mm. In this way, by setting a predetermined spacing, the air outlet area and heat distribution can be adjusted to avoid a drying rate of the electrode plate being too fast.

In some embodiments, in the second oven unit 20 and the fourth oven unit 40, the air nozzles 200 in the air nozzle group located above a plane at which the electrode plate P is located include at least two air outlet slits. In this way, a lower air speed can be achieved through the air outlet slits, slowing down the floating of the adhesives in the electrode plate. In particular embodiments, a spacing between adjacent air outlet slits ranges from about 1 mm to about 8 mm. In this way, the air speed can be further reduced, slowing down the floating of the adhesives in the electrode plate P. In other embodiments, in the second oven unit 20 and the fourth oven unit 40, the air nozzles 200 in the air nozzle group located above a plane at which the electrode plate P is located are provided with a plurality of air outlet openings. That is, an air outlet position of the air nozzle 200 has a mesh-like structure. In this way, the air outlet opening can be used to reduce the air outlet speed and slow down the floating of the adhesives in the electrode plate P. In particular embodiments, the air nozzle 200 has an open porosity ranging from about 10% to about 40%. In this way, the air speed can be further reduced, slowing down the floating of the adhesives in the electrode plate P. Since the mesh structure has a larger air outlet surface, an effect of reducing air speed is better than that of air outlet slits. In some embodiments, the air nozzle 200 with the mesh structure at the air outlet position may be selected.

In some embodiments, referring to FIG. 1, in the second oven unit 20 and the fourth oven unit 40, a plane at which the electrode plate P is located is defined as a second reference plane s2. A distance between the air nozzle 200 and the second reference plane s2 in the first direction z is a third distance a7 ranging from about 4 mm to about 200 mm. The first direction z (i.e. a vertical direction illustrated in FIG. 1) is perpendicular to the conveying direction x. In this way, by arranging the air nozzles 200 at a certain distance from the second reference plane s2, a more uniform drying process is realized while maintaining the drying speed.

In some embodiments, referring to FIG. 1, a total air volume P in the oven, a number n of the oven body 100, and an average air volume A in each oven body 100 satisfy following relationship: A=P/(n-1). An air volume A1 of the oven body 100 in the first oven unit 10, an air volume A2 of the oven body 100 in the second oven unit 20, an air volume A3 of the oven body 100 in the third oven unit 30, and an air volume A4 of the oven body 100 in the fourth oven unit 40 satisfy a second predetermined condition. The second predetermined condition includes: A1=(0.8~1.5)*A; A2=(0.5~1.0)*A; A3=(0.8~1.5)*A; and A4=(0.8~1.5)*A. In this way, by controlling the air volume in each oven body 100, it is convenient to adjust the temperature of the oven within a range from room temperature to 180 °C, and the product quality can be ensured while increasing the drying speed.

In some embodiments, the infrared heater 300 includes an infrared lamp tube. The infrared lamp tube is one of short wave, carbon medium wave and far infrared lamp tubes, which can be selected based on actual use requirements.

It should be noted that the plane on which the electrode plate P is located, the first reference plane s1, and the second reference plane s2 all refer to a position of the electrode plate P in the drying channel 110 during the conveying process. As an example, FIG. 1 illustrates that the plane on which the electrode plate P is located, the first reference plane s1 and second reference plane s2 are the same plane.

According to some embodiments of the present disclosure, the embodiments of the present disclosure provide a battery assembly line production device including the oven. As described above, since the oven is used to dry the electrode plate P, it is possible to obtain an electrode plate P with better performance, and it is further convenient to manufacture a battery with more excellent safety performance.

To sum up, in the oven provided by the embodiments of the present disclosure, each of the first oven unit 10 and the second oven unit 20 has the infrared heater 300. In this way, the drying rate can be improved, which is equivalent to shortening a length of the first oven unit 10 and the second oven unit 20, and correspondingly lengthening the length of the second oven unit 20. The fourth oven unit 40 does not need to be provided with the infrared heater, and only the air nozzle 200 is provided, which enables that the electrode plate P can be at a reduced speed and the cracking due to excessive temperature after the electrode plate P exits the oven can be avoided. At the same time, by setting an air volume in each of the oven units and setting an independent air return structure, the temperature in the oven can be adjusted within the range from room temperature to 180°C, and the floating amount of the adhesive in the electrode plate P can be reduced. In addition, in the second oven unit 20 and the fourth oven unit 40, an air outlet area of the air nozzle group in an upper row is larger than that of the air nozzle group in a lower row, which enables that the air outlet area can be increased, the air outlet speed can be reduced, and an instantaneous drying rate can be prevented from being too fast. Therefore, the oven provided by the embodiments of the present disclosure can not only improve the drying rate of the electrode plate P, but also ensure the quality of the electrode plate P and reduce the safety risks.

In order to make the description simple, all possible combinations of the technical features in the foregoing embodiments are not described. However, as long as there is no conflict between the technical features in the embodiments, any combination of technical features in the above-described embodiments may be adopted, which should be considered in the scope of this specification.

The above embodiments illustrate merely some implementations of the present disclosure, which are described in details but are not construed to limit the scope of the present disclosure. It should be pointed that, for those skilled in the art, without departing from the principle of the present disclosure, various changes and improvements may be made, which are covered by the protection scope of the present disclosure. Therefore, the protection scope of the present disclosure is according to the appended claims.

**Claims**

1. An oven for drying an electrode plate (P), the oven comprising a first oven unit (10), a second oven unit (20), a third oven unit (30), and a fourth oven unit (40) that are sequentially connected in series in a conveying direction (x) of the electrode plate (P), wherein:

   each of the first oven unit (10), the second oven unit (20), the third oven unit (30), and the fourth oven unit (40) is internally provided with at least one oven body (100) arranged in series in the conveying direction (x), each of the at least one oven body (100) having a drying channel (110) that extends in the conveying direction (x);
   each of the first oven unit (10), the second oven unit (20), the third oven unit (30), and the fourth oven unit (40) further comprises two opposite air nozzle groups that are located in the drying channel (110) and respectively disposed at a first side and a second side of the drying channel (110) in the conveying direction (x), each of the two air nozzle groups comprising a plurality of air nozzles (200) arranged at intervals in the conveying direction (x);
   each of the first oven unit (10) and the third oven unit (30) further comprises at least one infrared heater group located in a corresponding drying channel (110), the at least one infrared heater group being disposed on at least one of the first side and the second side of the drying channel (110), and each of the at least one infrared heater group comprising a plurality of infrared heaters (300) arranged at intervals in the conveying direction (x); and

the plurality of infrared heaters in each infrared heater group and the plurality of air nozzles (200) located at one side of the drying channel (110) are alternatively arranged in the conveying direction (x).

2. The oven according to claim 1, wherein in the first oven unit (10) and the third oven unit (30):

a spacing between two adjacent air nozzles (200) located at one side of the drying channel (110) is smaller than or equal to about 80 mm; and

a spacing between two adjacent infrared heaters (300) located at one side of the drying channel (110) is smaller than or equal to about 80 mm.

3. The oven according to claim 1, wherein in the first oven unit (10) and the third oven unit (30), a plane at which the electrode plate (P) is located is defined as a first reference plane (s1), a distance between the plurality of air nozzles (200) and the first reference surface in a first direction (z) ranging from about 4 mm to about 200 mm, and a distance between the plurality of infrared heaters (300) and the first reference surface in the first direction (z) ranging from about 20 mm to about 200 mm, and the first direction (z) being perpendicular to the conveying direction (x).

4. The oven according to claim 1, wherein each of the plurality of infrared heaters (300) has a radiation width d2 relative to the electrode plate (P) in a width direction (y) of the electrode plate (P), and each of the plurality of air nozzles (200) has a blowing coverage width d3 relative to the electrode plate (P) in the width direction (y) of the electrode plate (P), both the radiation width d2 and the blowing coverage width d3 being greater than a width d1 of the electrode plate (P), and the width direction (y) of the electrode plate (P) being perpendicular to the conveying direction (x) of the electrode plate (P).

5. The oven according to claim 4, wherein the width d1 of the electrode plate (P), the radiation width d2 of each of the plurality of infrared heaters (300) in the width direction (y) of the electrode plate (P), and the blowing coverage width d3 of each of the plurality of air nozzles (200) in the width direction (y) of the electrode plate (P) satisfy a first predetermined condition, wherein the first predetermined condition comprises a difference between d2 and d1 ranging from about 100 mm to about 600 mm and a difference between d3 and d1 ranging from about 100 mm to about 600 mm.

6. The oven according to claim 1, wherein in the first oven unit (10) and the third oven unit (30), the plurality of air nozzles (200) in each of the two air nozzle groups comprise air outlet nozzles and air return nozzles that are alternatively arranged in the conveying direction (x) of the electrode plate (P), each of the plurality of infrared heaters (300) being disposed between a corresponding air outlet nozzle and a corresponding air return nozzle.

7. The oven according to claim 1, wherein in the first oven unit (10) and the third oven unit (30), the plurality of air nozzles (200) in each of the two air nozzle groups comprise air outlet nozzles, the air outlet nozzles and the infrared heaters (300) being alternatively arranged in the conveying direction (x), one air return inlet being disposed between a corresponding infrared heater (300) and a corresponding the air outlet nozzle.

8. The oven according to claim 1, wherein in the second oven unit (20) and the fourth oven unit (40), an air nozzle group of the two air nozzle groups located above a plane at which the electrode plate (P) is located has an air outlet area greater than an air outlet area of an air nozzle group of the two air nozzle groups located below the plane at which the electrode plate (P) is located.

9. The oven according to claim 1, wherein in the second oven unit (20) and the fourth oven unit (40):

a spacing between adjacent air nozzles (200) in an air nozzle group of the two air nozzle groups located above a plane at which the electrode plate (P) is located is equal to or smaller than about 40 mm; and

a spacing between adjacent air nozzles (200) in an air nozzle group of of the two air nozzle groups located above the plane at which the electrode plate (P) is located is equal to or smaller than about 80 mm.

10. The oven according to claim 1, wherein in the second oven unit (20) and the fourth oven unit (40), a plurality of air nozzles (200) in an air nozzle group of the two air nozzle groups located above a plane at which the electrode plate (P) is located comprise at least two air outlet slits.

11. The oven according to claim 10, wherein a spacing between adjacent air outlet slits ranges from about 1 mm to about 8 mm.

**12.** The oven according to claim 1, wherein in the second oven unit (20) and the fourth oven unit (40), each of a plurality of air nozzles (200) in an air nozzle group of the two air nozzle groups located above a plane at which the electrode plate (P) is located has a plurality of air outlet openings; and, wherein preferably, the air nozzle (200) has an open porosity ranging from about 10% to about 40%.

**13.** The oven according to claim 1, wherein in the second oven unit (20) and the fourth oven unit (40), a plane at which the electrode plate (P) is located is defined as a second reference plane (s2), a distance between the plurality of air nozzles (200) and the second reference plane (s2) in a first direction (z) ranging from about 4 mm to about 200 mm, and the first direction (z) being perpendicular to the conveying direction (x).

**14.** The oven according to any one of claims 1 to 13, wherein:

a total air volume P in the oven, a number n of the oven body (100), and an average air volume A in each oven body (100) satisfy A=P/(n-1); and an air volume A1 of the oven body (100) in the first oven unit (10), an air volume A2 of the oven body (100) in the second oven unit (20), an air volume A3 of the oven body (100) in the third oven unit (30), and an air volume A4 of the oven body (100) in the fourth oven unit (40) satisfy a second predetermined condition, the second predetermined condition comprising:

$$A1=(0.8{\sim}1.5)*A;$$

$$A2=(0.5{\sim}1.0)*A;$$

$$A3=(0.8{\sim}1.5)*A;$$

and

$$A4=(0.8{\sim}1.5)*A.$$

**15.** A battery assembly line production device, comprising the oven according to any one of claims 1 to 14.

**Patentansprüche**

**1.** Ofen zum Trocknen einer Elektrodenplatte (P), wobei der Ofen eine erste Ofeneinheit (10), eine zweite Ofeneinheit (20), eine dritte Ofeneinheit (30) und eine vierte Ofeneinheit (40) umfasst, die nacheinander in einer Förderrichtung (x) der Elektrodenplatte (P) in Reihe verbunden sind, wobei:

jede aus der ersten Ofeneinheit (10), der zweiten Ofeneinheit (20), der dritten Ofeneinheit (30) und der vierten Ofeneinheit (40) innen mit mindestens einem Ofenkörper (100) versehen ist, die in der Förderrichtung (x) nacheinander angeordnet sind, wobei jeder aus dem mindestens einen Ofenkörper (100) einen Trocknungskanal (110) aufweist, der sich in der Förderrichtung (x) erstreckt; jede aus der ersten Ofeneinheit (10), der zweiten Ofeneinheit (20), der dritten Ofeneinheit (30) und der vierten Ofeneinheit (40) ferner zwei einander gegenüberliegende Luftdüsengruppen umfasst, die sich in dem Trocknungskanal (110) befinden und jeweils an einer ersten Seite und einer zweiten Seite des Trocknungskanals (110) in der Förderrichtung (x) angeordnet sind, wobei jede der zwei Luftdüsengruppen mehrere Luftdüsen (200) umfasst, die in Intervallen in der Förderrichtung (x) angeordnet sind; jede aus der ersten Ofeneinheit (10) und der dritten Ofeneinheit (30) ferner mindestens eine Infrarotheizgruppe umfasst, die sich in einem entsprechenden Trocknungskanal (110) befindet, wobei die mindestens eine Infrarotheizgruppe auf der ersten Seite und/oder der zweiten Seite des Trocknungskanals (110) angeordnet ist und wobei jede der mindestens einen Infrarotheizgruppe mehrere Infrarotheizer (300) umfasst, die in Intervallen in der Förderrichtung (x) angeordnet sind; und die mehreren Infrarotheizer in jeder Infrarotheizgruppe und die mehreren Luftdüsen (200), die sich auf einer Seite des Trocknungskanals (110) befinden, alternierend in der Förderrichtung (x) angeordnet sind.

**2.** Ofen nach Anspruch 1, wobei bei der ersten Ofeneinheit (10) und der dritten Ofeneinheit (30):

ein Abstand zwischen zwei angrenzenden Luftdüsen (200), die sich auf einer Seite des Trocknungskanals (110) befinden, kleiner oder gleich etwa 80 mm ist; und ein Abstand zwischen zwei angrenzenden Infrarotheizungen (300), die sich auf einer Seite des Trocknungskanals (110) befinden, kleiner oder gleich etwa 80 mm ist.

**3.** Ofen nach Anspruch 1, wobei in der ersten Ofeneinheit (10) und der dritten Ofeneinheit (30) eine Ebene, in der sich die Elektrodenplatte (P) befindet, als eine erste Referenzebene (s1) definiert ist, wobei ein Abstand zwischen den mehreren Luftdüsen (200) und der ersten Referenzfläche in einer ersten Richtung (z) im Bereich von etwa 4 mm bis etwa 200 mm liegt und ein Abstand zwischen den mehreren Infrarotheizungen (300) und der ersten Referenzfläche in der ersten Richtung (z) im Bereich von etwa 20 mm bis etwa 200 mm liegt und wobei die erste Richtung (z) senkrecht zu der Förderrichtung (x) ist.

4. Ofen nach Anspruch 1, wobei jeder der mehreren Infrarotheizer (300) eine Strahlungsbreite d2 relativ zu der Elektrodenplatte (P) in einer Breitenrichtung (y) der Elektrodenplatte (P) aufweist, und jede der mehreren Luftdüsen (200) eine Abblasbreite d3 relativ zu der Elektrodenplatte (P) in der Breitenrichtung (y) der Elektrodenplatte (P) aufweist, wobei sowohl die Strahlungsbreite d2 als auch die Abblasbreite d3 größer als eine Breite d1 der Elektrodenplatte (P) ist und die Breitenrichtung (y) der Elektrodenplatte (P) senkrecht zu der Förderrichtung (x) der Elektrodenplatte (P) ist.

5. Ofen nach Anspruch 4, wobei die Breite d1 der Elektrodenplatte (P), die Strahlungsbreite d2 jedes der mehreren Infrarotheizer (300) in der Breitenrichtung (y) der Elektrodenplatte (P), und die Abblasbreite d3 jeder der mehreren Luftdüsen (200) in der Breitenrichtung (y) der Elektrodenplatte (P) eine erste vorbestimmte Bedingung erfüllen, wobei die erste vorbestimmte Bedingung eine Differenz zwischen d2 und d1 im Bereich von etwa 100 mm bis etwa 600 mm und eine Differenz zwischen d3 und d1 im Bereich von etwa 100 mm bis etwa 600 mm umfasst.

6. Ofen nach Anspruch 1, wobei in der ersten Ofeneinheit (10) und der dritten Ofeneinheit (30) die mehreren Luftdüsen (200) in jeder der zwei Luftdüsengruppen Luftauslassdüsen und Luftrückführdüsen umfassen, die in der Förderrichtung (x) der Elektrodenplatte (P) alternierend angeordnet sind, wobei jeder der mehreren Infrarotheizer (300) zwischen einer entsprechenden Luftauslassdüse und einer entsprechenden Luftrückführdüse angeordnet ist.

7. Ofen nach Anspruch 1, wobei in der ersten Ofeneinheit (10) und der dritten Ofeneinheit (30) die mehreren Luftdüsen (200) in jeder der beiden Luftdüsengruppen Luftauslassdüsen umfassen, wobei die Luftauslassdüsen und die Infrarotheizer (300) in der Förderrichtung (x) alternierend angeordnet sind, wobei ein Luftrückführeinlass zwischen einem entsprechenden Infrarotheizer (300) und einer entsprechenden Luftauslassdüse angeordnet ist.

8. Ofen nach Anspruch 1, wobei in der zweiten Ofeneinheit (20) und der vierten Ofeneinheit (40) eine Luftdüsengruppe der zwei Luftdüsengruppen, die sich oberhalb einer Ebene befindet, in der sich die Elektrodenplatte (P) befindet, eine Luftaustrittsfläche aufweist, die größer ist als eine Luftaustrittsfläche einer Luftdüsengruppe der zwei Luftdüsengruppen, die sich unterhalb der Ebene befindet, in der sich die Elektrodenplatte (P) befindet.

9. Ofen nach Anspruch 1, wobei bei der zweiten Ofeneinheit (20) und der vierten Ofeneinheit (40):

ein Abstand zwischen angrenzenden Luftdüsen (200) in einer Luftdüsengruppe der beiden Luftdüsengruppen, die sich oberhalb einer Ebene befinden, in der sich die Elektrodenplatte (P) befindet, gleich oder kleiner als etwa 40 mm ist; und
ein Abstand zwischen angrenzenden Luftdüsen (200) in einer Luftdüsengruppe der beiden Luftdüsengruppen, die sich oberhalb der Ebene befinden, in der sich die Elektrodenplatte (P) befindet, gleich oder kleiner als etwa 80 mm ist.

10. Ofen nach Anspruch 1, wobei in der zweiten Ofeneinheit (20) und der vierten Ofeneinheit (40) mehrere Luftdüsen (200) in einer Luftdüsengruppe der zwei Luftdüsengruppen, die sich oberhalb einer Ebene befinden, in der sich die Elektrodenplatte (P) befindet, mindestens zwei Luftauslassschlitze umfassen.

11. Ofen nach Anspruch 10, wobei ein Abstand zwischen angrenzenden Luftauslassschlitzen im Bereich von etwa 1 mm bis etwa 8 mm liegt.

12. Ofen nach Anspruch 1, wobei in der zweiten Ofeneinheit (20) und der vierten Ofeneinheit (40) jede von mehreren Luftdüsen (200) in einer Luftdüsengruppe der zwei Luftdüsengruppen, die sich über einer Ebene befindet, in der sich die Elektrodenplatte (P) befindet, mehrere Luftauslassöffnungen aufweist; und
wobei vorzugsweise die Luftdüse (200) eine offene Porosität im Bereich von etwa 10 % bis etwa 40 % aufweist.

13. Ofen nach Anspruch 1, wobei in der zweiten Ofeneinheit (20) und der vierten Ofeneinheit (40) eine Ebene, in der sich die Elektrodenplatte (P) befindet, als eine zweite Referenzebene (s2) definiert ist, wobei ein Abstand zwischen den mehreren Luftdüsen (200) und der zweiten Referenzebene (s2) in einer ersten Richtung (z) im Bereich von etwa 4 mm bis etwa 200 mm liegt und die erste Richtung (z) senkrecht zu der Förderrichtung (x) ist.

14. Ofen nach einem der Ansprüche 1 bis 13, wobei:

ein Gesamtluftvolumen P im Ofen, eine Zahl n des Ofenkörpers (100) und ein durchschnittliches Luftvolumen A in jedem Ofenkörper (100) Folgendes erfüllen: A = P/(n-1); und

ein Luftvolumen A1 des Ofenkörpers (100) in der ersten Ofeneinheit (10), ein Luftvolumen A2 des Ofenkörpers (100) in der zweiten Ofeneinheit (20), ein Luftvolumen A3 des Ofenkörpers (100) in der dritten Ofeneinheit (30) und ein Luftvolumen A4 des Ofenkörpers (100) in der vierten Ofeneinheit (40) eine zweite vorbestimmte Bedingung erfüllen, wobei die zweite vorbestimmte Bedingung Folgendes umfasst:

$$A1=(0{,}8\sim1{,}5)*A;$$

$$A2=(0{,}5\sim1{,}0)*A;$$

$$A3=(0{,}8\sim1{,}5)*A;$$

und

$$A4=(0{,}8\sim1{,}5)*A.$$

15. Produktionsvorrichtung für Batteriemontagestraße, umfassend den Ofen nach einem der Ansprüche 1 bis 14.

**Revendications**

1. Four pour sécher une plaque (P) d'électrode, le four comprenant une première unité (10) de four, une deuxième unité (20) de four, une troisième unité (30) de four et une quatrième unité (40) de four qui sont connectées séquentiellement en série dans une direction de transport (x) de la plaque (P) d'électrode, dans lequel :

   la première unité (10) de four, la deuxième unité (20) de four, la troisième unité (30) de four et la quatrième unité (40) de four sont chacune pourvues intérieurement d'au moins un corps (100) de four disposé en série dans la direction de transport (x), le ou chaque corps (100) de four présentant un canal (110) de séchage qui s'étend dans la direction de transport (x) ;
   chacune des première (10), deuxième (20), troisième (30) et quatrième (40) unités de four comprend en outre deux groupes de buses d'air opposés qui sont situés dans le canal (110) de séchage et disposés respectivement sur un premier côté et un second côté du canal (110) de séchage dans la direction de transport (x), chacun des deux groupes de buses d'air comprenant une pluralité de buses (200) d'air disposées à intervalles dans la direction de transport (x);
   la première unité (10) de four et la troisième unité (30) de four comprennent en outre chacune au moins un groupe de dispositifs de chauffage à infrarouges situé dans un canal (110) de séchage correspondant, le groupe de dispositifs de chauffage à infrarouges étant disposé du premier et/ou du second côté du canal (110) de séchage, et le ou chaque groupe de dispositifs de chauffage à infrarouges comprenant une pluralité de dispositifs (300) de chauffage à infrarouges disposés à intervalles dans la direction de transport (x) ; et
   la pluralité de dispositifs de chauffage à infrarouges dans chaque groupe de dispositifs de chauffage à infrarouges et la pluralité de buses (200) d'air située sur un côté du canal (110) de séchage sont disposées en alternance dans la direction de transport (x).

2. Four selon la revendication 1, dans lequel, dans la première unité (10) de four et la troisième unité (30) de four :

   un espacement entre deux buses (200) d'air adjacentes situées sur un côté du canal (110) de séchage est inférieur ou égal à environ 80 mm ;
   un espacement entre deux dispositifs (300) de chauffage à infrarouges adjacents situés sur un côté du canal (110) de séchage est inférieur ou égal à environ 80 mm.

3. Four selon la revendication 1, dans lequel dans la première unité (10) de four et la troisième unité (30) de four, un plan au niveau duquel la plaque (P) d'électrode est située est défini comme un premier plan de référence (s1), une distance entre la pluralité de buses (200) d'air et la première surface de référence dans une première direction (z) allant d'environ 4 mm à environ 200 mm, et une distance entre la pluralité de dispositifs (300) de chauffage à infrarouges et la première surface de référence dans la première direction (z) allant d'environ 20 mm à environ 200 mm, la première direction (z) étant perpendiculaire à la direction de transport (x).

4. Four selon la revendication 1, dans lequel chacun de la pluralité de dispositifs (300) de chauffage à infrarouges présente une largeur de rayonnement d2 par rapport à la plaque (P) d'électrode dans une direction de largeur (y) de la plaque (P) d'électrode. chacune de la pluralité de buses (200) d'air présente une largeur de couverture de soufflage d3 par rapport à la plaque (P) d'électrode dans la direction de largeur (y) de la plaque (P) d'électrode, la largeur de rayonnement d2 et la largeur de couverture de soufflage d3 étant toutes deux supérieures à une largeur d1 de la plaque (P) d'électrode, et la direction de largeur (y) de la plaque (P) d'électrode étant perpendiculaire au sens de transport (x) de la plaque

13

(P) d'électrode.

**5.** Four selon la revendication 4, dans lequel la largeur d1 de la plaque (P) d'électrode, la largeur de rayonnement d2 de chacun de la pluralité de dispositifs (300) de chauffage à infrarouges dans la direction de largeur (y) de la plaque (P) d'électrode et la largeur de couverture de soufflage d3 de chacune de la pluralité de buses (200) d'air dans la direction de largeur (y) de la plaque (P) d'électrode satisfont à une première condition prédéterminée, la première condition prédéterminée comprenant une différence entre d2 et d1 allant d'environ 100 mm à environ 600 mm et une différence entre d3 et d1 allant d'environ 100 mm à environ 600 mm.

**6.** Four selon la revendication 1, dans lequel dans la première unité (10) de four et la troisième unité (30) de four, la pluralité de buses (200) d'air dans chacun des deux groupes de buses d'air comprend des buses de sortie d'air et des buses de retour d'air qui sont disposées en alternance dans la direction de transport (x) de la plaque (P) d'électrode, chacun de la pluralité de dispositifs (300) de chauffage à infrarouges étant disposé entre une buse de sortie d'air correspondante et une buse de retour d'air correspondante.

**7.** Four selon la revendication 1, dans lequel dans la première unité (10) de four et la troisième unité (30) de four, la pluralité de buses (200) d'air dans chacun des deux groupes de buses d'air comprend des buses de sortie d'air, les buses de sortie d'air et les dispositifs (300) de chauffage à infrarouges étant disposés en alternance dans la direction de transport (x), une entrée de retour d'air étant disposée entre un dispositif (300) de chauffage à infrarouges correspondant et une buse de sortie d'air correspondante.

**8.** Four selon la revendication 1, dans lequel dans la deuxième unité (20) de four et la quatrième unité (40) de four, un groupe de buses d'air des deux groupes de buses d'air situé au-dessus d'un plan dans lequel est située la plaque (P) d'électrode présente une superficie de sortie d'air supérieure à une superficie de sortie d'air d'un groupe de buses d'air des deux groupes de buses d'air situé au-dessous du plan dans lequel est située la plaque (P) d'électrode.

**9.** Four selon la revendication 1, dans lequel dans la deuxième unité (20) de four et la quatrième unité (40) de four :

un espacement entre des buses (200) d'air adjacentes dans un groupe de buses d'air des deux groupes de buses d'air situé au-dessus d'un plan dans lequel la plaque (P) d'électrode est située est égal ou inférieur à environ 40 mm ;

et
un espacement entre des buses (200) d'air adjacentes dans un groupe de buses d'air des deux groupes de buses d'air situé au-dessus du plan dans lequel est située la plaque (P) d'électrode est égal ou inférieur à environ 80 mm.

**10.** Four selon la revendication 1, dans lequel dans la deuxième unité (20) de four et la quatrième unité (40) de four, une pluralité de buses (200) d'air dans un groupe de buses d'air des deux groupes de buses d'air situé au-dessus d'un plan dans lequel la plaque (P) d'électrode est située comprend au moins deux fentes de sortie d'air.

**11.** Four selon la revendication 10, dans lequel un espacement entre des fentes de sortie d'air adjacentes est compris entre environ 1 mm et environ 8 mm.

**12.** Four selon la revendication 1, dans lequel dans la deuxième unité (20) de four et la quatrième unité (40) de four, chacune d'une pluralité de buses (200) d'air dans un groupe de buses d'air des deux groupes de buses d'air situé au-dessus d'un plan dans lequel la plaque (P) d'électrode est située a une pluralité d'ouvertures de sortie d'air ; et,
de préférence, la buse (200) d'air présente une porosité ouverte comprise entre environ 10 % et environ 40 %.

**13.** Four selon la revendication 1, dans lequel dans la deuxième unité (20) de four et la quatrième unité (40) de four, un plan au niveau duquel la plaque (P) d'électrode est située est défini comme un second plan de référence (s2), une distance entre la pluralité de buses (200) d'air et le second plan de référence (s2) dans une première direction (z) allant d'environ 4 mm à environ 200 mm, et la première direction (z) étant perpendiculaire à la direction de transport (x).

**14.** Four selon l'une quelconque des revendications 1 à 13, dans lequel :

un volume d'air total P dans le four, un nombre n de corps (100) de four et un volume d'air moyen A dans chaque corps (100) de four satisfont A=P/(n-1) ; et
un volume d'air A1 du corps (100) de four dans la première unité (10) de four, un volume d'air A2 du corps (100) de four dans la deuxième unité (20) de four, un volume d'air A3 du corps (100) de four dans la troisième unité (30) de four, et un volume d'air A4 du corps (100) de four dans la quatrième unité (40) de four satisfont à une seconde condition prédéterminée, la seconde condition prédéterminée comprenant :

$$A1=(0,8 \sim 1,5)*A \, ;$$

$$A2=(0,5 \sim 1,0)*A \, ;$$

$$A3=(0,8 \sim 1,5)*A \, ;$$

et

$$A4=(0,8 \sim 1,5)*A.$$

15. Dispositif de production d'une chaîne d'assemblage de batteries, comprenant le four selon l'une quelconque des revendications 1 à 14.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010269366 A
- JP 2004071472 A
- JP HO58372 B